(19) Europäisches Patentamt
European Patent Office
Office européen des brevets

(11) **EP 1 910 699 B1**

(12) **EUROPÄISCHE PATENTSCHRIFT**

(45) Veröffentlichungstag und Bekanntmachung des Hinweises auf die Patenterteilung:
**15.02.2012 Patentblatt 2012/07**

(21) Anmeldenummer: **06776235.1**

(22) Anmeldetag: **15.07.2006**

(51) Int Cl.:
**F16D 48/06** *(2006.01)*

(86) Internationale Anmeldenummer:
**PCT/EP2006/006936**

(87) Internationale Veröffentlichungsnummer:
**WO 2007/014636 (08.02.2007 Gazette 2007/06)**

(54) **VERFAHREN UND STEUERUNGSEINRICHTUNG ZUM EINSTELLEN EINER DREHZAHL EINER WELLE EINES ZAHNRÄDERWECHSELGETRIEBES**

METHOD AND CONTROL DEVICE FOR ADJUSTING A SPEED OF A SHAFT IN A GEAR SELECTOR BOX

PROCEDE ET DISPOSITIF DE COMMANDE PERMETTANT DE REGLER UNE VITESSE DE ROTATION D'UN ARBRE D'UNE BOITE DE VITESSES A ENGRENAGES

(84) Benannte Vertragsstaaten:
**DE FR GB SE**

(30) Priorität: **03.08.2005 DE 102005036477**

(43) Veröffentlichungstag der Anmeldung:
**16.04.2008 Patentblatt 2008/16**

(73) Patentinhaber: **Daimler AG**
**70327 Stuttgart (DE)**

(72) Erfinder:
• **BARTELS, Ulrich**
**70565 Stuttgart (DE)**
• **GUGGOLZ, Manfred**
**71277 Rutesheim (DE)**
• **HILLENBRAND, Werner**
**72639 Neuffen (DE)**
• **ULMER, David**
**70794 Filderstadt (DE)**

(56) Entgegenhaltungen:
**EP-A- 0 536 932      EP-A- 0 645 277**
**US-B1- 6 332 860**

**Beschreibung**

Die Erfindung betrifft ein Verfahren zum Einstellen einer Drehzahl einer Welle eines Zahnräderwechselgetriebes mit den Merkmalen des Oberbegriffs des Anspruchs 1 und eine Steuerungseinrichtung eines Zahnräderwechselgetriebes eines Kraftfahrzeugs mit den Merkmalen des Anspruchs 11.

Die DE 102 09 512 A1 beschreibt ein Verfahren zum Einstellen einer Drehzahl einer Welle eines synchronisierten Zahnräderwechselgetriebes bei einem Gangwechsel zur Synchronisierung eines Zielgangs. Zwischen dem Zahnräderwechselgetriebe und einer Antriebsmaschine in Form eines Motors ist eine automatisierte Kupplung angeordnet. Bei einem Gangwechsel des Zahnräderwechselgetriebes wird zur Entlastung der Synchronisierung des Zielgangs die Kupplung so eingestellt, dass ein Drehmoment von der Antriebsmaschine auf die Welle übertragen und die Welle dadurch beschleunigt wird. Über den Wert des Drehmoments bzw. die einzustellende Kupplungsposition macht die DE 102 09 512 A1 keine Angaben.

Die EP 0 536 932 A2 beschreibt ein Verfahren zur Steuerung einer automatisierten Kupplung eines Kraftfahrzeugs beim Anfahren oder Kriechen. Mit dem Verfahren wird eine Drehzahl, nämlich die Getriebeeingangsdrehzahl auf einen Zielwert beschleunigt. Bei der Durchführung des Verfahrens ist ein Gang im Getriebe fest eingelegt.

Die US 6 332 860 B1 beschreibt ein Verfahren zur Steuerung/Regelung einer Kupplung eines Automatikgetriebes bei einer Zug-Hochschaltung. Das Automatikgetriebe ist als ein Getriebe mit zumindest einem Planetensatz ausgeführt. Bei dem Automatikgetriebe werden die verschiedenen Gänge durch Schließen bestimmter Kupplungen und/oder Bremsen innerhalb des Automatikgetriebes gebildet.

Demgegenüber ist es die Aufgabe der Erfindung, ein Verfahren und eine Steuerungseinrichtung vorzuschlagen, mittels welchen eine genaue und schnelle Einstellung der Drehzahl der Welle in einen Bereich um eine Zieldrehzahl ermöglicht wird. Erfindungsgemäß wird die Aufgabe durch ein Verfahren mit den Merkmalen des Anspruchs 1 und eine Steuerungseinrichtung mit den Merkmalen des Anspruchs 11 gelöst.

Erfindungsgemäß wird ein Sollwert für eine Kupplungsposition der Kupplung und damit das übertragbare Drehmoment der Kupplung in Abhängigkeit von einer Drehzahldifferenz zwischen einer gemessenen Drehzahl der Welle und einer Zieldrehzahl festgelegt. Ein Zusammenhang zwischen einer eine erwartete Änderung der Drehzahl der Welle kennzeichnenden Kenngröße und der Kupplungsposition in der Steuerungseinrichtung gespeichert. Die Kenngröße kann insbesondere als ein zeitlicher Gradient der Drehzahl der Welle ausgeführt sein. Ausgehend von der genannten Drehzahldifferenz wird ein Sollwert für die Kenngröße, also insbesondere ein Sollwert für den Gradienten der Drehzahl, bestimmt und mit Hilfe des Sollwerts für die Kenngröße und dem gespeicherten Zusammenhang der Sollwert für die Kupplungsposition ermittelt. Der Zusammenhang kann beispielsweise als ein funktionaler Zusammenhang oder als eine Kennlinie ausgeführt sein. Es ist ebenfalls möglich, dass die Kenngröße in einem Kennfeld in Abhängigkeit von der Kupplungsposition und einer weiteren Größe, wie beispielsweise einer Temperatur der Kupplung oder eines Getriebeöls abgespeichert ist.

Die Kupplungsposition kann dabei absolut oder relativ zum abgespeicherten Kontaktpunkt der Kupplung berücksichtigt werden.

Die Kupplung ist insbesondere als eine Reibungskupplung ausgeführt. Die Zieldrehzahl entspricht genau oder ungefähr der so genannten Synchrondrehzahl des Zielgangs. Die Synchrondrehzahl des Zielgangs ist die Drehzahl der Welle, die sich nach dem Einlegen des Zielgangs einstellt. Diese Drehzahl ist von der Übersetzung des Zielgangs und von der Geschwindigkeit des Kraftfahrzeugs abhängig.

Ausgehend von einer aktuell gemessenen Drehzahl der Welle und der sich daraus ergebenden Drehzahldifferenz zur Zieldrehzahl wird ein gewünschter Verlauf der Drehzahl der Welle bestimmt. Der gewünschte Verlauf der Drehzahl ist insbesondere aus wenigstens zwei Abschnitten mit einem konstanten Drehzahlgradienten zusammengesetzt. Ausgehend von dem gewünschten Verlauf wird ein Verlauf für den Sollwert der genannten Kenngröße und mittels des gespeicherten Zusammenhangs zwischen der Kenngröße und der Kupplungsposition der Sollwert für die Kupplungsposition bestimmt. Damit kann ein gewünschter Verlauf der Drehzahl vorgegeben werden, der ein möglichst schnelles Erreichen des Bereichs um die Zieldrehzahl ermöglicht und gleichzeitig ein Überschwingen, also ein schnelles Verlassen des Bereichs um die Zieldrehzahl verhindert. Bei der Bestimmung des Sollverlaufs können Reaktionszeiten der Kupplung berücksichtigt werden. Diese treten insbesondere bei hydraulisch oder pneumatisch betätigten Kupplungen auf. Unter der Reaktionszeit ist die Zeit zwischen der Ansteuerung der Kupplung und der tatsächlichen Änderung der Drehzahl der Welle zu verstehen.

Mittels des erfindungsgemäßen Verfahrens kann beispielsweise eine Vorgelegewelle oder eine Getriebeeingangswelle in einen Bereich um die Zieldrehzahl eingestellt, insbesondere beschleunigt werden. Bei einem so genannten unsynchronisierten Getriebe oder Klauengetriebe, also einem Getriebe ohne Synchronisiereinrichtungen für jeden Gang, ist das Einlegen des Zielgangs nur möglich, wenn sich die Drehzahl der Vorgelegewelle in einem Bereich um die Synchrondrehzahl befindet.

Die Einstellung der Drehzahl ist mit dem erfindungsgemäßen Verfahren auch dann schon möglich, wenn die Drehzahl der Antriebsmaschine noch nicht in einem Bereich um die Drehzahl liegt, die sich nach dem Einlegen des Zielgangs einstellt. Diese Drehzahl ergibt sich beispielsweise aus der Synchrondrehzahl der Vorgelegewelle und einer etwaigen Übersetzung einer Vorschaltgruppe. Damit kann die Synchronisation im Zahnräderwechselgetriebe weitgehend unabhängig von der Einstellung der Drehzahl der Antriebsmaschine erfolgen. Der Zielgang kann damit sehr schnell eingelegt werden. Falls die Drehzahl der Antriebsmaschine nach dem Einlegen des Zielgangs noch nicht die erforderliche Drehzahl erreicht hat, so kann durch Schließen der Kupplung die Anpassung der Drehzahl der Antriebsmaschine erreicht werden.

Falls sich die Drehzahl der Antriebsmaschine schon in dem genannten Bereich befindet, kann die Kupplung so weit geschlossen werden, dass kein Schlupf an der Kupplung auftritt, wodurch die Drehzahl der Welle des Zahnräderwechselgetriebes in den gewünschten Bereich um die Zieldrehzahl gebracht wird.

Durch die Berücksichtigung der Drehzahldifferenz zwischen einer gemessenen Drehzahl und der Zieldrehzahl kann die Einstellung der Drehzahl sehr genau erfolgen. Dies ist insbesondere deshalb wichtig, da beim Einsatz des Verfahrens der Antriebsstrang des Kraftfahrzeugs aufgetrennt ist und damit schon sehr kleine Drehmomente eine große Beschleunigung der Welle und damit eine starke Veränderung der Drehzahl bewirken. Eine sehr einfache Berücksichtigung der Drehzahldifferenz kann beispielsweise dadurch erfolgen, dass in einer Steuerungseinrichtung des Zahnräderwechselgetriebes ein Zusammenhang, beispielsweise in Form einer Kennlinie, zwischen der Drehzahldifferenz und dem Sollwert der Kupplungsposition gespeichert ist.

Die gemessene Drehzahl muss dabei nicht immer der aktuellen Drehzahl der Welle entsprechen. Es ist auch möglich, dass zu einem oder mehreren Zeitpunkten die Drehzahl gemessen wird und aufbauend auf der sich damit ergebenden Drehzahldifferenz der Sollwert der Kupplungsposition bestimmt wird.

In Ausgestaltung der Erfindung ist in einer die Kupplung und das Zahnräderwechselgetriebe ansteuernden Steuerungseinrichtung eine Kupplungsposition für einen Kontaktpunkt der Kupplung abgespeichert. Der Kontaktpunkt ist der Punkt, ab dem die Kupplung ein Drehmoment übertragen kann. Bei einer Reibungskupplung ist der Kontaktpunkt der Punkt, bei dem sich die Kupplungsbeläge berühren. Der Sollwert der Kupplungsposition wird dann relativ zum Kontaktpunkt festgelegt. Verfahren zur Bestimmung des Kontaktpunkts sind bekannt. Die Bestimmung kann beispielsweise mittels den in der DE 199 52 862 A1 oder der DE 102 32 495 A1 beschriebenen Verfahren erfolgen.

Die Position des Kontaktpunktes kann bei prinzipiell baugleichen Kupplungen fertigungs- und toleranzbedingt schwanken. Außerdem kann sich die Kupplungsposition des Kontaktpunktes über die Betriebsdauer der Kupplung durch Verschleiß stark verändern. Bei Anwendung des erfindungsgemäßen Verfahrens wird die Einstellung der Drehzahl der Welle genauer. Dies ist insbesondere dann der Fall, wenn die Kupplungsposition des Kontaktpunktes an die tatsächlichen Gegebenheiten an der Kupplung angepasst und damit adaptiert wird. Damit kann sichergestellt werden, dass der gespeicherte Kontaktpunkt immer dem tatsächlichen Kontaktpunkt der Kupplung entspricht.

Die Kupplung und das Zahnräderwechselgetriebe können auch von getrennten Steuerungseinrichtungen angesteuert werden. Diese Steuerungseinrichtungen stehen dann miteinander in Signalverbindung, so dass sie die notwendigen Signale austauschen können.

In Ausgestaltung der Erfindung wird der Sollwert der Kupplungsposition so festgelegt, dass sich bei einer großen Drehzahldifferenz die Drehzahl der Welle schneller ändert als bei einer kleinen Drehzahldifferenz. Damit wird erreicht, dass die Drehzahl der Welle zum einen sehr schnell in Richtung der Zieldrehzahl verändert wird und gleichzeitig verhindert wird, dass die Drehzahl der Welle einen Bereich um die Zieldrehzahl zu schnell wieder verlässt. Damit wird erreicht, dass bei einem Gangwechsel sehr schnell ein Einlegend des Zielgangs möglich wird und dennoch das mögliche Zeitfenster zum Einlegen des Zielgang nicht zu kurz wird.

Der gespeicherte Zusammenhang zwischen der eine erwartete Änderung der Drehzahl der Welle kennzeichnenden Kenngröße und der Kupplungsposition kann insbesondere ausgehend von einem Vergleich der sich bei einer eingestellten Kupplungsposition tatsächlich ergebenden Kenngröße mit der gespeicherten Kenngröße angepasst werden. Damit kann der Zusammenhang an die tatsächlichen Begebenheiten angepasst werden, womit eine besonders genaue Einstellung einer gewünschten Kenngröße ermöglicht wird.

Der Sollwert der Kupplungsposition kann bei der Bestimmung des gewünschten Verlaufs der Drehzahl der Welle in Abhängigkeit vom zeitlichen Abstand zu einem Startzeitpunkt festgelegt werden; der Ablauf kann also zeitgesteuert sein. Es ist ebenfalls möglich, dass der Sollwert der Kupplungsposition in Abhängigkeit von der Drehzahldifferenz zwischen der gemessenen Drehzahl der Welle und der Zieldrehzahl festgelegt wird; der Ablauf kann also drehzahlgesteuert sein. Im dem Fall, in dem der gewünschte Verlauf aus Abschnitten mit konstantem Drehzahlgradienten zusammengesetzt ist, kann beispielsweise bei Erreichen bestimmter Drehzahldifferenzschwellen auf einen anderen Gradienten umgeschaltet werden. Es ist auch eine Kombination aus zeit- und drehzahlgesteuertem Ablauf möglich.

In Ausgestaltung der Erfindung wird bei der Bestimmung des gewünschten Verlaufs der Drehzahl der Welle eine mögliche Änderung der Zieldrehzahl berücksichtigt. Die Zieldrehzahl kann sich beispielsweise ändern, wenn die Fahrbahn eine Steigung oder ein Gefälle aufweist oder wenn das Kraftfahrzeug mittels einer Betriebsbremse abgebremst wird. Der Verlauf der Fahrbahn kann beispielsweise aus einem Vergleich des Antriebsmoments mit der tatsächlichen Beschleunigung des Kraftfahrzeugs oder aus einer digitalen Straßenkarte bestimmt werden.

Damit wird gewährleistet, dass bei einem Gangwechsel der Zielgang auch dann sicher eingelegt werden kann, wenn sich die Synchrondrehzahl durch eine Änderung der Geschwindigkeit des Kraftfahrzeugs ändert.

In Ausgestaltung der Erfindung wird die Kupplungsposition ausgehend von einer Startposition in Richtung geschlossene Position der Kupplung verändert, die Drehzahl der Welle beobachtet und bei einer signifikanten Änderung der Drehzahl der gewünschte Verlauf der Drehzahl bestimmt. Das Verhalten einer Kupplung ist nicht immer reproduzierbar. Es treten langfristige und kurzfristige Schwankungen auf. Die Bestimmung des gewünschten Verlaufs der Drehzahl führt insbesondere dann zum gewünschten Ergebnis, wenn die Kupplung eine Position erreicht hat, ab der ein weiteres Schließen der Kupplung eine signifikante Änderung der Drehzahl der Welle bewirkt. Diese Position kann sehr sicher durch das beschriebene Vorgehen gefunden werden. Die Startposition wird insbesondere so gewählt, dass sich noch keine Änderung der Drehzahl ergibt. Die signifikante Änderung wird beispielsweise dann erkannt, wenn der Gradient der Drehzahl einen Schwellwert überschreitet oder die Abweichung der Drehzahl der Welle von der Drehzahl beim Anfahren der Startposition einen Schwellwert überschreitet.

Bei dem beschriebenen Zusammenhang zwischen der Kenngröße und der Kupplungsposition, kann die Kupplungsposition auch relativ zu der Kupplungsposition, bei der sich die signifikante Änderung der Drehzahl ergibt, abgespeichert sein.

In Ausgestaltung der Erfindung wird der Verlauf der Drehzahl der Welle überwacht, geprüft, ob der Verlauf eine festgelegte Bedingung erfüllt und beim Erfüllen der Bedingung ein Offsetwert bestimmt, um welchen die während des Verfahrens bestimmten Sollwerte der Kupplungspositionen in Richtung geschlossene Position verschoben werden. Es kann beispielsweise geprüft werden, ob der Gradient der Drehzahl nach einer festgelegten Zeitspanne nach Einstellen der Startposition kleiner ist als ein Grenzwert, beispielsweise 0. In diesem Fall wird angenommen, dass die Startposition zu weit in Richtung offene Position der Kupplung gewählt wurde. Der Offset kann fest vorgegeben sein oder in Abhängigkeit von der Startposition, der Änderungsgeschwindigkeit der Kupplungsposition, der gespeicherten Kontaktposition der Kupplung und/oder dem gespeicherten Zusammenhang zwischen der Kenngröße und der Kupplungsposition bestimmt werden.

Damit kann eine Startposition, die zu weit in Richtung offener Position der Kupplung gelegen ist, ausgeglichen werden. Es wird so auch in dem genannten Fall eine schnelle und sichere Einstellung der Drehzahl ermöglicht.

In Ausgestaltung der Erfindung wird ausgehend von einer aktuellen Drehzahl der Welle und einem aktuellen Drehzahlgradienten ein zukünftiger Verlauf der Drehzahl abgeschätzt. Anhand dieser Abschätzung wird geprüft, ob der Verlauf eine festgelegte Bedingung erfüllt. Es wird beispielsweise geprüft, ob der Gradient der Drehzahl eine Schwelle überschreitet oder ob die abgeschätzte Drehzahl innerhalb einer festgelegten Zeitspanne einen Bereich um die Zieldrehzahl erreicht. Bei einem positiven Ergebnis der Prüfung wird der Sollwert der Kupplungsposition so festgelegt, dass sich voraussichtlich ein Gradient der Drehzahl von 0 ergibt. Wie bereits ausgeführt, wird das Verfahren bei geöffnetem Antriebsstrang ausgeführt, so dass schon kleine Drehmomente ausreichen, um eine Änderung der Drehzahl der Welle zu bewirken. Das Einstellen von kleinen Drehmomenten ist sehr schwierig, so dass es auch passieren kann, dass sich ein zu großer Gradient der Welle einstellt und sich damit die Gefahr ergibt, dass die Drehzahl der Welle den Bereich um die Zieldrehzahl zu schnell wieder verlässt. Sobald diese Gefahr erkannt wird, wird eine Kupplungsposition eingestellt, bei der sich voraussichtliche ein Drehzahlgradient von 0 einstellt. Die Kupplungsposition ist insbesondere in der Steuerungseinrichtung gespeichert und kann beispielsweise aus dem beschriebenen Zusammenhang zwischen der Kenngröße und der Kupplungsposition bestimmt werden.

Weitere Vorteile der Erfindung gehen aus der Beschreibung und der Zeichnung hervor. Ausführungsbeispiele der Erfindung sind in der Zeichnung vereinfacht dargestellt und in der nachfolgenden Beschreibung näher erläutert. In der Zeichnung zeigen:

Fig. 1   ein unsynchronisiertes automatisiertes Zahnräderwechselgetriebe,

Fig. 2   ein Ablaufdiagramm eines Verfahrens nach der Erfindung,

Fig. 3   ein gewünschter Verlauf einer Drehzahl einer Welle des Zahnräderwechselgetriebes bei einem Gangwechsel und

Fig. 4   eine Kennlinie, in der ein Drehzahlgradient über einer Kupplungsposition aufgetragen ist.

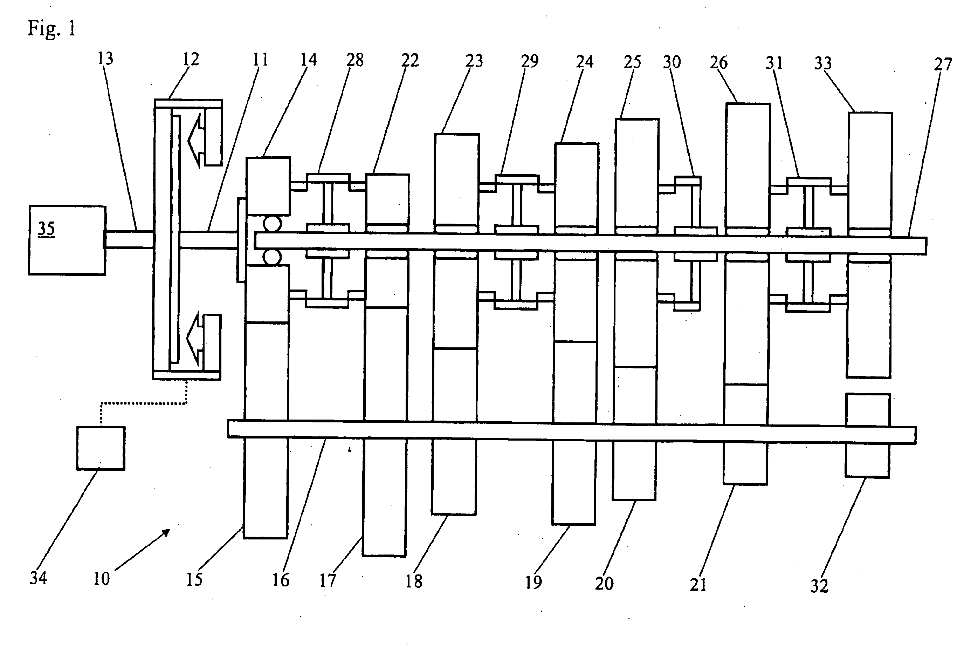

Gemäß Fig.1 verfügt ein unsynchronisiertes Zahnräderwechselgetriebe 10 über eine Eingangswelle 11, welche über eine automatisierte Kupplung 12 mit einer koaxial angeordneten Ausgangswelle 13 einer Antriebsmaschine 35 koppelbar ist. Die Kupplung 12 kann mittels einer nicht dargestellten Betätigungseinrichtung, welche von einer Steuerungseinrichtung 34 angesteuert wird, ein- und ausgerückt werden. Die Steuerungseinrichtung 34 kann also eine Position der Kupplung 12 einstellen. Ein Zahnrad 14 ist mit der Antriebswelle 11 verdrehfest verbunden und kämmt mit einem Zahnrad 15, welches mit einer, parallel zur Eingangswelle 11 angeordneten, Vorgelegewelle 16 verdrehfest verbunden ist. Auf der Vorgelegewelle 16 sind verdrehfest Festräder 17, 18, 19, 20 und 21 für den 6., 3., 4., 2. und 1. Gang angeordnet. Die Festräder 17, 18, 19, 20 und 21 kämmen jeweils mit zugehörigen Losrädern 22, 23, 24, 25 und 26, welche drehbar auf einer koaxial zur Eingangswelle 11 angeordneten Getriebeausgangswelle 27 angeordnet sind. Das Losrad 22 kann mit einer Schiebemuffe 28, die Losräder 23 und 24 mit einer Schiebemuffe 29, das Losrad 25 mit einer Schiebemuffe 30 und das Losrad 26 mit einer Schiebemuffe 31 verdrehfest mit der Getriebeausgangswelle 27 verbunden werden. Die Schiebemuffen 28, 29, 30, 31 können dazu mittels einer nicht dargestellten Betätigungseinrichtung, welche ebenfalls von der Steuerungseinrichtung 34 angesteuert wird, auf der Getriebeausgangswelle 27 in gewissen Grenzen axial bewegt werden. Die Betätigungseinrichtung kann beispielsweise hydraulisch oder pneumatisch betätigbar sein.

Wenn beispielsweise der 4. Gang eingelegt ist, ist das Losrad 24 mittels der Schiebemuffe 29 verdrehfest mit der Getriebeausgangswelle 27 verbunden. Die Drehzahl und das Drehmoment der Antriebsmaschine 35 wird dann über die Ausgangswelle 13, die Kupplung 12, die Eingangswelle 11, die Zahnräder 14 und 15, die Vorgelegewelle 16, das Festrad 19, das Losrad 24 und die Schiebemuffe 29 auf die Getriebeausgangswelle 27 übertragen. Von der Getriebeausgangswelle 27 wird die Drehzahl und das Drehmoment mittels einer nicht dargestellten Antriebswelle an ein nicht dargestelltes Achsgetriebe übertragen, welches in an sich bekannter Weise das Drehmoment in gleichen oder unterschiedlichen Anteilen über zwei nicht dargestellte Abtriebswellen an nicht dargestellte Antriebsräder überträgt.

Bei einem Gangwechsel des Zahnräderwechselgetriebes 10 muss die Synchronisierung des Zielgangs, also das Einstellen der Drehzahl der Vorgelegewelle 16 in einen Bereich um eine Zieldrehzahl in der Nähe der Synchrondrehzahl mittels der Antriebsmaschine 35 erfolgen. Das Zahnräderwechselgetriebe kann auch über eine Getriebebremse verfügen, mittels welcher die Vorgelegewelle abgebremst werden kann.

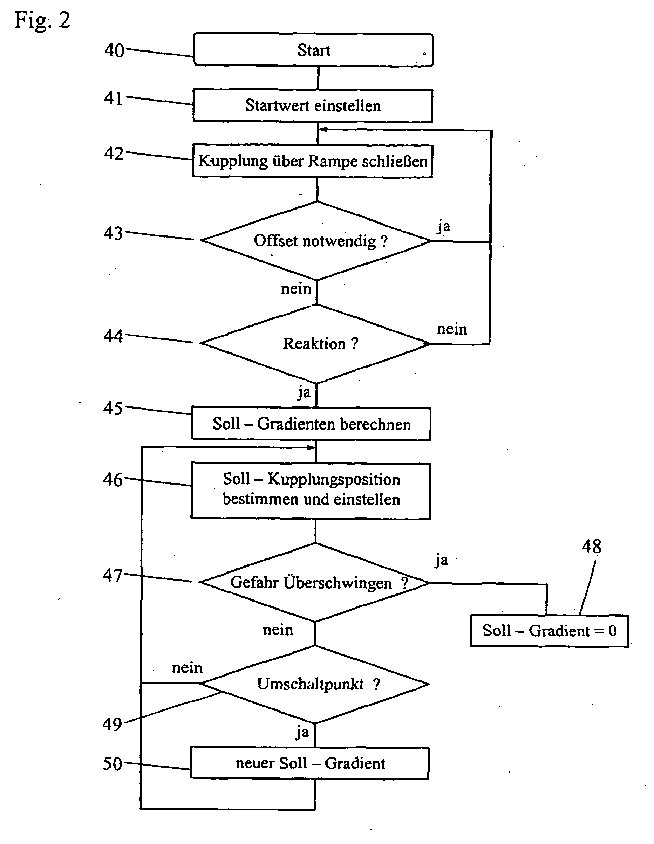

In Fig. 2 ist ein Ablaufdiagramm eines Verfahrens zur Einstellung der Drehzahl der Vorgelegewelle dargestellt. Bei dem Ablauf wird davon ausgegangen, dass sich die auf die Drehzahl der Vorgelegewelle umgerechnete Drehzahl der Antriebsmaschine nicht in dem für das Einlegen des Zielgangs erforderlichen Bereich um die Zieldrehzahl befindet. In diesem Fall könnte die Kupplung so weit geschlossen werden, dass kein Schlupf an ihr auftritt. Die Drehzahl der Vorgelegewelle würde damit ohne weitere Maßnahmen in den Bereich um die Zieldrehzahl gebracht.

Das Verfahren startet im Block 40. Im Block 41 wird ein Startwert für die Kupplungsposition eingestellt. Der Startwert ergibt sich aus einer in der Steuerungseinrichtung gespeicherten Kupplungsposition für einen Kontaktpunkt der Kupplung und einer gespeicherten Abweichung vom Kontaktpunkt in Richtung geschlossener Stellung der Kupplung. Der Kontaktpunkt der Kupplung wird in einem anderen, hier nicht weiter beschriebenen Verfahren bestimmt. Der Startwert ist so festgelegt, dass sich noch keine Änderung der Drehzahl der Vorgelegewelle ergibt.

Anschließend wird im Block 42 die Kupplung über eine Rampe langsam geschlossen. Dazu wird bei jedem Durchlaufen des Blocks 42 die Kupplung um ein festgelegtes Maß weiter geschlossen. Im darauf folgenden Abfrageblock 43 wird geprüft, ob ein Offset für die Kupplungsposition notwendig ist. Dazu wird geprüft, ob nach Ablauf einer festgelegten Zeitspanne der Gradient der Drehzahl der Vorgelegewelle kleiner als 0 ist. Ist das Ergebnis der Prüfung positiv, so wird ein Offset, berechnet, um den alle in dem aktuellen Durchlauf des Verfahrens berechneten Sollwerte der Kupplungsposition in Richtung geschlossene Position verschoben werden. Der Offset berechnet sich aus dem Mittelwert der bisherigen Sollwerte der Kupplungsposition abzüglich der Kupplungsposition, die einen Gradienten der Drehzahl der Vorgelegewelle von 0 ergeben müsste. Die Kupplungsposition für einen Gradienten von 0 wird aus einer in der Steuerungseinrichtung gespeicherten Kennlinie, in der der erwartete Gradient der Vorgelegewelle über der Kupplungsposition relativ zur Kontaktposition aufgetragen ist, bestimmt. Auf diese Kennlinie wird weiter unten noch näher eingegangen.

Falls ein Offset notwendig ist, wird der Block 42 wiederholt. Falls kein Offset notwendig ist, wird das .Verfahren im Abfrageblock 44 fortgesetzt.

Im Abfrageblock 44 wird geprüft, ob die Vorgelegewelle eine Reaktion auf das Schließen der Kupplung zeigt. Dazu wird in jedem Durchlauf des Abfrageblocks 44 geprüft, ob der Gradient der Drehzahl der Vorgelegewelle größer als ein Schwellwert ist. Ist die Prüfung negativ, so wird der Block 42 wiederholt.

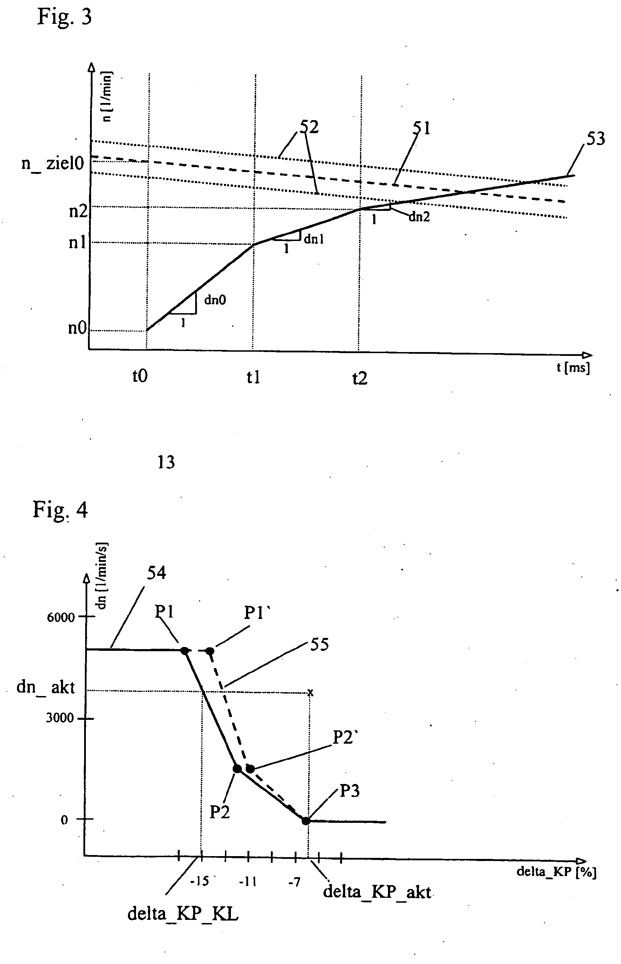

Ist die Prüfung positiv, so wird das Verfahren im Block 45 fortgesetzt. Im Block 45 wird ausgehend von der aktuellen Drehzahl der Vorgelegewelle, der Zieldrehzahl und einer erwarteten Änderung der Zieldrehzahl ein gewünschter Verlauf der Drehzahl der Vorgelegewelle festgelegt. Die Zieldrehzahl ist um einen kleinen Differenzwert kleiner als die Synchrondrehzahl des Zielgangs, welche sich aus der aktuellen Geschwindigkeit des Kraftfahrzeugs und der Übersetzung des Zielgangs ergibt. Ausgehend von einer Information über eine Steigung oder ein Gefälle der Fahrbahn werden außerdem ein zukünftiger Verlauf der Geschwindigkeit und damit eine Änderung der Zieldrehzahl abgeschätzt. In Fig. 3 ist ein gewünschter Verlauf der Drehzahl der Vorgelegewelle über der Zeit dargestellt. Die Zieldrehzahl 51 sinkt in dem dargestellten Beispiel leicht ab, da sich das Kraftfahrzeug in einer leichten Steigung befindet. Die gepunkteten Linien 52 kennzeichnen einen Bereich um die Zieldrehzahl 51, in den die Drehzahl der Vorgelegewelle gebracht werden soll. Der gewünschte Verlauf der Drehzahl der Vorgelegewelle ist als Linie 53 dargestellt. Der Drehzahlwert n0 zum Zeitpunkt t0 repräsentiert dabei den aktuellen Wert der Drehzahl. Der gewünschte Verlauf ist aus drei Abschnitten mit gleicher Dauer und jeweils konstantem Gradienten zusammengesetzt. Bei der Festlegung der Dauer der einzelnen Abschnitte wurde die Reaktionszeit der Kupplung und des Zahnräderwechselgetriebes berücksichtigt. Die Dauer beträgt beispielsweise zwischen 70 und 100 ms. Zur Bestimmung der einzelnen Gradienten wird zunächst der letzte Gradient bestimmt. Dazu wird der Gradient dn2 so festgelegt, dass der gewünschte Verlauf für das Durchfahren durch den Bereich um die Zieldrehzahl eine festgelegte Zeit benötigt. Dabei wird auch die Änderung der Zieldrehzahl berücksichtigt.

Der Gradient des dritten Abschnitts dn2 berechnet sich nach folgender Formel

$$dn2 = 2*n\_Tol / t\_syn + dn\_ziel$$

wobei n_Tol die Breite des Toleranzbereichs in eine Richtung, t_syn die Zeit für das Durchqueren des Bereichs und dn_ziel den Gradienten der Zieldrehzahl repräsentieren. Damit lässt sich eine Drehzahl n2 zum Beginn (t2) des dritten Abschnitts berechnen.

Der Gradient dn1 des mittleren Abschnitts wird so festgelegt, dass er um einen festgelegten Wert, beispielsweise 1000 1/min/s größer ist als dn2. Damit lässt sich eine Drehzahl n1 zum Beginn (t1) des mittleren Abschnitts berechnen. Abschließend wird der Gradient dn0 des ersten Abschnitts so festgelegt, dass die gewünschte Drehzahl der Vorgelegewelle zum Zeitpunkt t1 den Wert n1 erreicht:

$$dn0 = (n\_ziel0 - n0 + (3*dn\_ziel - dn1 - dn2) * t\_ab)/t\_ab$$

wobei n_zie10 die Zieldrehzahl zum Zeitpunkt t0 und t_ab die Dauer der einzelnen Abschnitte repräsentieren.

Damit sind die Sollgradienten der Drehzahl der Vorgelegewelle bestimmt, womit das Verfahren gemäß Fig. 2 im Block 46 fortgesetzt werden kann. Der Sollgradient beim ersten Durchlaufen des Blocks 46 entspricht dem Gradienten dn0 des ersten Abschnitts aus Fig. 3.

In Block 46 wird ausgehend vom Sollgradient der Drehzahl der Vorgelegewelle aus einer in der Steuerungseinrichtung abgespeicherten Kennlinie ein Sollwert für die Kupplungsposition bestimmt. Ein Beispiel für eine derartige Kennlinie ist in Fig. 4 dargestellt. In der Kennlinie 54 ist der Sollgradient dn in [1/min/s] über der Abweichung der Kupplungsposition delta_KP vom Kontaktpunkt in [%] aufgetragen. Eine negative Abweichung bedeutet dabei eine Kupplungsposition, welche im Vergleich zum Kontaktpunkt in Richtung geschlossener Position verschoben ist. Die Kennlinie wird durch drei Punkte P1, P2, P3 festgelegt, zwischen welchen linear interpoliert wird. Für delta_KP-Werte kleiner als der delta_KP-Wert von P1 oder größer P3 werden die jeweiligen dn-Werte beibehalten. Der aus der Kennlinie Sollwert der Kupplungsposition wird anschließend an der Kupplung eingestellt.

Im folgenden Abfrage-Block 47 wird geprüft, ob eine Gefahr besteht, dass der Verlauf der Drehzahl der Vorgelegewelle über die Zieldrehzahl überschwingt. Dazu wird ausgehend von der aktuellen Drehzahl der Vorgelegewelle unter der Annahme, dass der aktuelle Drehzahlgradient beibehalten wird, der Verlauf der Drehzahl vorausberechnet. Dabei wird geprüft, ob die Drehzahl innerhalb einer festlegbaren Zeitspanne, welche beispielsweise 20 - 50 ms betragen kann, den gewünschten Bereich um die Zieldrehzahl voraussichtlich erreichen wird. Fällt die Prüfung positiv aus, so wird in Block 48 ein Sollgradient von 0 festgelegt und der Sollwert für die Kupplungsposition entsprechend festgelegt.

Fällt die Prüfung negativ aus, so wird im Abfrageblock 49 geprüft, ob eine Änderung des Sollgradienten der Drehzahl der Vorgelegewelle notwendig ist. Falls der Sollgradient momentan den Wert dn0 hat, so wird geprüft, ob die aktuelle Drehzahl größer oder gleich n1; falls der Sollgradient momentan den Wert dn1 hat, so wird geprüft, ob die aktuelle Drehzahl größer oder gleich n2 ist. Falls die Prüfung positiv ausfällt, so wird im Block 50 ein neuer Soll-Gradient festgelegt. Der Sollgradient ändert sich also entweder von dn0 nach dn1 oder von dn1 nach dn2.

Bei einem negativen Ergebnis er Prüfung im Abfrage-Block 49 oder nach Beendigung des Blocks 50 wird der Block 46 wiederholt.

Das Verfahren hat keinen Ende-Block, da es so lange ausgeführt wird, bis der Zielgang von einem anderen, hier nicht beschriebenen Verfahren eingelegt wird und das Verfahren gemäß der Fig. 2 abgebrochen wird. Ein Abbruch kann auch durch andere übergeordnete Verfahren abgebrochen werden. Die Kennlinie gemäß Fig. 4, in welcher der Sollgradient dn über der Abweichung der Kupplungsposition delta_KP vom Kontaktpunkt aufgetragen ist, wird laufend an die tatsächlichen Gegebenheiten angepasst. Dazu wird der Gradient der Vorgelegewelle bestimmt, der sich bei einer eingestellten Kupplungsposition ergibt. Ein Beispiel für einen derartig erfassten Betriebspunkt ist in der Fig. 4 als "x" mit einem delta_KP-Wert delta_KP_akt und einem dn-Wert dn_akt dargestellt. Mit diesem dn-Wert von dn_akt wird der delta_KP-Wert delta_KP_KL bestimmt, der sich bei diesem dn-Wert aus der Kennlinie ergeben hätte. Anschließend wird die Differenz aus delta_KP_akt und delta_KP_KL gebildet und mit einem Faktor, welcher beispielsweise zwischen 0,05 und 0,3 liegen kann, multipliziert. Diese Multiplikation liefert als Ergebnis einen Wert, um welchen die zugehörigen Kennlinienpunkte (hier P1 und P2) umgekehrt proportional zu ihrem Abstand zu dn_akt in Richtung des erfassten Betriebspunkts verschoben werden. Die sich ergebenden Punkte P1' und P2' sind ebenfalls in Fig. 4 dargestellt. Die gestrichelte Linie 55 zeigt die sich dann neu ergebende Kennlinie, die beim nächsten Durchlauf des Verfahrens verwendet wird.

Bei der Adaption der Kennlinie können die sich neu ergebenden Punkte P1' und P2' direkt abgespeichert werden. Alternativ dazu können auch nur die Abweichungen der neuen Punkte von den ursprünglich gespeicherten Punkten abgespeichert werden.

Da das Verhalten der Kupplung auch von der Temperatur der Kupplung oder der Temperatur eines Getriebeöls abhängt, kann bei der Kennlinie auch noch ein temperaturabhängiger Offset berücksichtigt werden. Der Offset ist in einer Temperaturkennlinie über der Temperatur in der Steuerungseinrichtung gespeichert. Der Offset wird bei der Bildung und Auswertung der Kennlinie zu den delta_KP-Werten der Stützpunkte P1, P2 und P3 hinzuaddiert.

Das beschriebene Verfahren nutzt an mehreren Stellen die Kontaktposition der Kupplung. Diese Kontaktposition kann beispielsweise von einem weiteren Verfahren bestimmt werden. Neben der direkten Nutzung der Kontaktposition kann auch jeweils der bislang kleinste und größte Wert der Kontaktposition erfasst werden und als Grundlage für die beschriebenen Berechnungen der Mittelwert der beiden Werte herangezogen werden. Die beiden Extremwerte können ebenfalls adaptiert werden, indem beispielsweise bei jeder Initialisierung der Steuerungseinrichtung (beispielsweise bei jedem Einschalten der Zündung des Kraftfahrzeugs) der kleinste Wert um einen gespeicherten Wert, beispielsweise 0,2 %, erhöht und der größte Wert um den selben Betrag verkleinert wird.

Außerdem ist es möglich, als Kontaktposition für den aktuellen Durchlauf des Verfahrens die Kupplungsposition zu nutzen, bei der die Vorgelegewelle eine Reaktion auf das Schließen der Kupplung zeigt. Diese Kupplungsposition entspricht der Kupplungsposition beim Übergang vom Abfrageblock 43 zum Abfrageblock 44.

**Patentansprüche**

1. Verfahren zum Einstellen einer Drehzahl einer Welle eines Zahnräderwechselgetriebes (10) eines Kraftfahrzeugs bei einem Gangwechsel zur Synchronisierung eines Zielgangs, wobei zwischen dem Zahnräderwechselgetriebe (10) und einer Antriebsmaschine (35) eine automatisierte Kupplung (12) angeordnet ist und die Einstellung der Drehzahl mittels eines über die Kupplung (12) übertragenen Drehmoments der Antriebsmaschine (35) erfolgt und ein Sollwert für eine Kupplungsposition der Kupplung (12) in Abhängigkeit von einer Drehzahldifferenz zwischen einer gemessenen Drehzahl der Welle (16) und einer Zieldrehzahl in Form einer Synchrondrehzahl des Zielgangs festgelegt wird,

   **dadurch gekennzeichnet, dass**

   - ein Zusammenhang zwischen einer eine erwartete Änderung der Drehzahl der Welle (16) kennzeichnenden Kenngröße und der Kupplungsposition in der Steuerungseinrichtung (34) gespeichert ist,
   - ausgehend von der genannten Drehzahldifferenz ein Sollwert für die Kenngröße bestimmt wird und
   - mit Hilfe des Sollwerts für die Kenngröße und dem gespeicherten Zusammenhang der Sollwert für die Kupplungsposition ermittelt wird und
   - ausgehend von einer aktuell gemessenen Drehzahl der Welle (16) und der sich daraus ergebenden Drehzahldifferenz zur Zieldrehzahl ein gewünschter Verlauf der Drehzahl der Welle bestimmt wird,
   - ausgehend von dem gewünschten Verlauf ein Verlauf für den Sollwert der genannten Kenngröße bestimmt wird und
   - mittels des gespeicherten Zusammenhangs zwischen der Kenngröße und der Kupplungsposition der Sollwert für die Kupplungsposition bestimmt wird.

2. Verfahren nach Anspruch 1,
   **dadurch gekennzeichnet, dass**
   in einer die Kupplung (12) und das Zahnräderwechselgetriebe (10) ansteuernden Steuerungseinrichtung (34) eine Kupplungsposition für einen Kontaktpunkt der Kupplung (12) abgespeichert ist und der Sollwert der Kupplungsposition relativ zum Kontaktpunkt festgelegt wird.

3. Verfahren nach Anspruch 1 oder 2,
   **dadurch gekennzeichnet, dass**
   der Sollwert der Kupplungsposition so festgelegt wird, dass sich bei einer großen Drehzahldifferenz die Drehzahl der Welle (16) schneller ändert als bei einer kleinen Drehzahldifferenz.

4. Verfahren nach Anspruch 1,
   **dadurch gekennzeichnet, dass**
   ausgehend von einem Vergleich der sich bei einer eingestellten Kupplungsposition tatsächlich ergebenden Kenngröße mit der gespeicherten Kenngröße der Zusammenhang zwischen der Kenngröße und der Kupplungsposition angepasst wird.

**5.** Verfahren nach Anspruch 1,
**dadurch gekennzeichnet, dass**
bei der Bestimmung des gewünschten Verlaufs der Drehzahl der Welle (16) eine mögliche Änderung der Zieldrehzahl berücksichtigt wird.

**6.** Verfahren nach Anspruch 4 oder 5,
**dadurch gekennzeichnet, dass**
der gewünschte Verlauf der Drehzahl aus wenigstens zwei Abschnitten mit einem konstanten Drehzahlgradienten zusammengesetzt ist.

**7.** Verfahren nach Anspruch 1, 5 oder 6,
**dadurch gekennzeichnet, dass**

- die Kupplungsposition ausgehend von einer Startposition in Richtung geschlossene Position der Kupplung (12) verändert wird,
- die Drehzahl der Welle (16) beobachtet wird und
- bei einer signifikanten Änderung der Drehzahl der gewünschte Verlauf der Drehzahl bestimmt wird.

**8.** Verfahren nach Anspruch 7,
**dadurch gekennzeichnet, dass**
die Startposition so festgelegt wird, dass sich voraussichtlich kein positiver Gradient der Drehzahl der Welle (16) ergibt.

**9.** Verfahren nach Anspruch 7 oder 8,
**dadurch gekennzeichnet, dass**

- der Verlauf der Drehzahl der Welle (16) überwacht wird,
- geprüft wird, ob der Verlauf eine festgelegte Bedingung erfüllt und
- beim Erfüllen der Bedingung ein Offsetwert bestimmt wird, um welchen die während des Verfahrens bestimmten Sollwerte der Kupplungspositionen in Richtung geschlossene Position verschoben werden.

**10.** Verfahren nach einem der vorhergehenden Ansprüche,
**dadurch gekennzeichnet, dass**

- ausgehend von einer aktuellen Drehzahl der Welle (16) und einem aktuellen Drehzahlgradienten ein zukünftiger Verlauf der Drehzahl abgeschätzt wird,
- geprüft wird, ob der Verlauf eine festgelegte Bedingung erfüllt und
- bei einem positiven Ergebnis der Prüfung der Sollwert der Kupplungsposition so festgelegt wird, dass sich voraussichtlich ein Gradient der Drehzahl von Null ergibt.

**11.** Steuerungseinrichtung eines Zahnräderwechselgetriebes eines Kraftfahrzeugs, wobei zwischen dem Zahnräderwechselgetriebe (10) und einer Antriebsmaschine (35) eine automatisierte Kupplung (12) angeordnet ist und die Steuerungseinrichtung (34) dazu vorgesehen ist, bei einem Gangwechsel zur Synchronisierung eines Zielgangs eine Drehzahl einer Welle (16) des Zahnräderwechselgetriebes (10) mittels eines über die Kupplung (12) übertragenen Drehmoments der Antriebsmaschine (35) einzustellen und
die Steuerungseinrichtung (34) dazu vorgesehen ist, einen Sollwert für eine Kupplungsposition der Kupplung (12) in Abhängigkeit von einer Drehzahldifferenz zwischen einer gemessenen Drehzahl der Welle (16) und einer Zieldrehzahl in Form einer Synchrondrehzahl des Zielgangs festzulegen, **dadurch gekennzeichnet, dass**

- ein Zusammenhang zwischen einer eine erwartete
- Änderung der Drehzahl der Welle (16) kennzeichnenden
- Kenngröße und der Kupplungsposition in der
- Steuerungseinrichtung (34) gespeichert ist,

und die Steuerungseinrichtung (34) außerdem dazu vorgesehen ist,

- ausgehend von der genannten Drehzahldifferenz einen Sollwert für die Kenngröße zu bestimmen,
- mit Hilfe des Sollwerts für die Kenngröße und dem gespeicherten Zusammenhang den Sollwert für die Kupplungsposition zu ermitteln,
- ausgehend von einer aktuell gemessenen Drehzahl der Welle (16) und der sich daraus ergebenden Drehzahldifferenz zur Zieldrehzahl einen gewünschten Verlauf der Drehzahl der Welle zu bestimmen,
- ausgehend von dem gewünschten Verlauf einen Verlauf für den Sollwert der genannten Kenngröße zu bestimmen und
- mittels des gespeicherten Zusammenhangs zwischen der Kenngröße und der Kupplungsposition den Sollwert für die Kupplungsposition zu bestimmen.

**Claims**

1. Method for adjusting a speed of a shaft of a speed-change gearbox (10) of a motor vehicle in a gear change operation for the synchronisation of a target gear, wherein an automated clutch (12) is provided between the speed-change gearbox (10) and a motor (35) and the speed is adjusted by means a torque of the motor (35) transmitted via the clutch (12) and a set value is set for a clutch position of the clutch (12) in dependence on a speed difference between a measured speed of the shaft (16) and a target speed in the form of a synchronous speed of the target gear, **characterised in that**

   - an interrelation between a characteristic value which characterises an expected change of the speed of the shaft (16) and the clutch position is stored in the control unit (34),
   - a set value for the characteristic value is determined on the basis of the said speed difference,
   - the set value for the clutch position is determined with the aid of the set value for the characteristic value and the stored interrelation,
   - a desired progression of the speed of the shaft is determined on the basis of a currently measured speed of the shaft (16) and the resulting speed difference relative to the target speed,
   - a progression for the set value of the said characteristic value is determined on the basis of the desired progression, and
   - the set value for the clutch position is determined by means of the stored interrelation between the characteristic value and the clutch position.

2. Method according to claim 1,
   **characterised in that**
   a clutch position for a contact point of the clutch (12) is stored in a control unit (34) controlling the clutch (12) and the speed-change gearbox (10), and the set value of the clutch position relative to the contact point is defined.

3. Method according to claim 1 or 2,
   **characterised in that**
   the set value of the clutch position is defined such that the speed of the shaft (16) changes faster at a large speed difference than at a small speed difference.

4. Method according to claim 1,
   **characterised in that**
   the interrelation between the characteristic value and the clutch position is adapted on the basis of a comparison between the actual characteristic value resulting at an adjusted clutch position and the stored characteristic value.

5. Method according to claim 1,
   **characterised in that**
   in determining the desired progression of the speed of the shaft (16), a possible change of the target speed is taken into account.

6. Method according to claim 4 or 5,
   **characterised in that**
   the desired progression of the speed is built up from at least two sections with a constant speed gradient.

7. Method according to claim 1, 5 or 6,
   **characterised in that**

   - the clutch position is changed on the basis of a starting position in the direction of the engaged position of the clutch (12),
- the speed of the shaft (16) is observed, and
- the desired progression of the speed is determined if the speed changes significantly.

**8.** Method according to claim 7,
**characterised in that**
the starting position is defined such that no positive gradient of the speed of the shaft (16) is to be expected.

**9.** Method according to claim 7 or 8,
**characterised in that**

- the progression of the speed of the shaft (16) is monitored,
- it is checked whether the progression meets a specified condition, and
- if the condition is met, an offset value is determined by which the set values of the clutch positions determined in the execution of the method are shifted towards the engaged position.

**10.** Method according to any of the preceding claims,
**characterised in that**

- a future progression of the speed is estimated on the basis of a current speed of the shaft (16) and a current speed gradient,
- it is checked whether the progression meets a specified condition, and
- if the result of the check is positive, the set value of the clutch position is defined such that a zero speed gradient is to be expected.

**11.** Control unit of a speed-change gearbox of a motor vehicle, wherein an automated clutch (12) is provided between the speed-change gearbox (10) and a motor (35) and the control unit (34) is provided to adjust a speed of a shaft (16) of the speed-change gearbox (10) by means a torque of the motor (35) transmitted via the clutch (12) in a gear change operation for the synchronisation of a target gear, and the control unit (34) is provided to set a set value for a clutch position of the clutch (12) in dependence on a speed difference between a measured speed of the shaft (16) and a target speed in the form of a synchronous speed of the target gear,
**characterised in that**

- an interrelation between a characteristic value which characterises an expected change of the speed of the shaft (16) and the clutch position is stored in the control unit (34),

and **in that** the control unit (34) is further provided to

- determine a set value for the characteristic value on the basis of the said speed difference,
- determine the set value for the clutch position with the aid of the set value for the characteristic value and the stored interrelation,
- determine a desired progression of the speed of the shaft on the basis of a currently measured speed of the shaft (16) and the resulting speed difference relative to the target speed,
- determine a progression for the set value of the said characteristic value on the basis of the desired progression, and
- determine the set value for the clutch position by means of the stored interrelation between the characteristic value and the clutch position.

**Revendications**

**1.** Procédé permettant de régler une vitesse de rotation d'un arbre d'une boîte de vitesses à engrenages (10) d'un véhicule automobile lors d'un changement de vitesse pour synchroniser un rapport cible, un embrayage (12) automatique étant disposé entre la boîte de vitesses à engrenages (10) et un moteur de commande (35) et le réglage de la vitesse de rotation s'effectuant au moyen d'un couple du moteur de commande (35) transmis par l'embrayage (12) et une valeur théorique d'une position d'embrayage (12) étant déterminée en fonction d'une différence de vitesse de rotation entre une vitesse de rotation mesurée de l'arbre (16) et une vitesse de rotation cible sous forme d'une vitesse de rotation synchrone du rapport cible, **caractérisé en ce qu'**

- une corrélation entre un paramètre indiquant un changement escompté de la vitesse de rotation de l'arbre (16) et la position d'embrayage est enregistrée dans le dispositif de commande (34),
- une valeur théorique du paramètre est déterminée à partir de ladite différence de vitesse de rotation et
- la valeur théorique de la position d'embrayage est définie à l'aide de la valeur théorique du paramètre et de la corrélation enregistrée et
- la courbe souhaitée de la vitesse de rotation de l'arbre est déterminée à partir d'une vitesse de rotation actuelle mesurée de l'arbre (16) et de la différence de vitesse de rotation en résultant par rapport à la vitesse de rotation cible,
- une courbe de la valeur théorique dudit paramètre est déterminée à partir de la courbe souhaitée et
- la valeur théorique de la position d'embrayage est déterminée au moyen de la corrélation enregistrée entre le paramètre et la position d'embrayage.

2. Procédé selon la revendication 1, **caractérisé en ce que** dans un dispositif de commande (34) commandant l'embrayage (12) et la boîte de vitesses à engrenages (10) est enregistrée une position d'embrayage pour un point de contact de l'embrayage (12) et la valeur théorique de la position d'embrayage est déterminée par rapport au point de contact.

3. Procédé selon la revendication 1 ou la revendication 2, **caractérisé en ce que** la valeur théorique de la position d'embrayage est déterminée de telle sorte que la vitesse de rotation de l'arbre (16) change plus rapidement lorsque la différence de vitesse de rotation est grande que lorsque la différence de vitesse de rotation est faible.

4. Procédé selon la revendication 1, **caractérisé en ce que** la corrélation entre le paramètre et la position d'embrayage est adaptée à partir d'une comparaison entre le paramètre résultant effectivement d'une position d'embrayage réglée et le paramètre enregistré.

5. Procédé selon la revendication 1, **caractérisé en ce qu'**un changement éventuel de la vitesse de rotation est pris en compte lorsqu'une courbe souhaitée de la vitesse de rotation de l'arbre (16) est déterminée.

6. Procédé selon la revendication 4 ou 5, **caractérisé en ce que** la courbe souhaitée de la vitesse de rotation est composée d'au moins deux sections ayant un gradient de vitesse de rotation constant.

7. Procédé la revendication 1, 5 ou 6, **caractérisé en ce que**

- la position d'embrayage est modifiée à partir d'une position de départ dans le sens de la position fermée de l'embrayage (12),
- la vitesse de rotation de l'arbre (16) est observée et
- la courbe souhaitée de la vitesse de rotation est déterminée lorsque la vitesse de rotation est modifiée de manière significative.

8. Procédé selon la revendication 7, **caractérisé en ce que** la position de départ est déterminée de telle sorte qu'il ne résulte vraisemblablement aucun gradient positif de la vitesse de rotation de l'arbre (16).

9. Procédé selon la revendication 7 ou 8, **caractérisé en ce que**

- la courbe de la vitesse de rotation de l'arbre (16) est surveillée,
- il est vérifié que la courbe remplit une condition déterminée et
- lorsque la condition est remplie, une valeur de décalage est déterminée pour décaler certaines valeurs théoriques des positions d'embrayage dans le sens de la position fermée lors du procédé.

10. Procédé selon l'une quelconque des revendications précédentes, **caractérisé en ce qu'**

- une courbe future de la vitesse de rotation est évaluée à partir d'une vitesse de rotation actuelle de l'arbre (16) et d'un gradient actuel de vitesse de rotation,
- il est vérifié que la courbe remplit une condition déterminée et
- en cas de résultat positif de la vérification la valeur théorique de la position d'embrayage est déterminée de telle sorte qu'un gradient de vitesse de rotation soit vraisemblablement de 0.

11. Dispositif de commande d'une boîte de vitesses à engrenages d'un véhicule automobile, entre la boîte de vitesses à engrenages (10) et un moteur de commande (35) étant disposée un embrayage (12) automatique et lors d'un changement de vitesse pour synchroniser un rapport cible, le dispositif de commande sert à régler une vitesse de rotation d'un arbre (16) de la boîte de vitesses à engrenages (10) au moyen d'un couple du moteur de commande (35) transmis par l'embrayage (12) et le dispositif de commande (34) sert à déterminer une valeur théorique d'une position d'embrayage (12) en fonction d'une différence de vitesse de rotation entre une vitesse de rotation mesurée de l'arbre (16) et une vitesse de rotation cible sous forme d'une vitesse de rotation synchrone du rapport cible, **caractérisé en ce qu'**

    - une corrélation entre un paramètre indiquant un changement escompté de la vitesse de rotation de l'arbre (16) et la position d'embrayage est enregistrée dans le dispositif de commande (34), et le dispositif de commande (34) est en outre prévu pour
    - déterminer à partir de ladite différence de vitesse de rotation une valeur théorique du paramètre,
    - définir à l'aide de la valeur théorique du paramètre et de la corrélation enregistrée la valeur théorique de la position d'embrayage,
    - déterminer à partir d'une vitesse de rotation actuelle mesurée de l'arbre (16) et de la différence de vitesse de rotation en résultant par rapport à la vitesse de rotation cible une courbe souhaitée de la vitesse de rotation de l'arbre,
    - déterminer à partir de la courbe souhaitée une courbe de la valeur théorique dudit paramètre et
    - déterminer la valeur théorique de la position d'embrayage au moyen de la corrélation enregistrée entre le paramètre et la position d'embrayage.

Fig. 1

Fig. 2

40 — Start

41 — Startwert einstellen

42 — Kupplung über Rampe schließen

43 — Offset notwendig ? — ja / nein

44 — Reaktion ? — nein / ja

45 — Soll – Gradienten berechnen

46 — Soll – Kupplungsposition bestimmen und einstellen

47 — Gefahr Überschwingen ? — ja / nein

48 — Soll – Gradient = 0

49 — Umschaltpunkt ? — nein / ja

50 — neuer Soll – Gradient

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10209512 A1
- EP 0536932 A2
- US 6332860 B1
- DE 19952862 A1
- DE 10232495 A1